# EUROPÄISCHE PATENTSCHRIFT

(11) **EP 3 255 088 B1**
(45) Veröffentlichungstag und Bekanntmachung des Hinweises auf die Patenterteilung: **29.04.2020**
(21) Anmeldenummer: 16001280.3
(22) Anmeldetag: 07.06.2016
(51) Int. Cl.: C08L 9/02, C08K 3/34, C08L 15/00, C08L 21/00, C08K 5/14, C08K 9/06

(54) **VERWENDUNG VON VULKANISIERBAREN ZUSAMMENSETZUNGEN UND VULKANISATEN IN KONTAKT MIT KÜHLMITTEL ENTHALTEND SILAN-BESCHICHTETEN WOLLASTONIT**
USE OF VULCANIZABLE COMPOSITIONS AND VULCANIZATES IN CONTACT WITH SILANE-COATED WOLLASTONITE CONTAINING COOLANT
UTILISATION DE COMPOSITIONS VULCANISABLES ET VULCANISATS EN CONTACT AVEC UN AGENT DE REFROIDISSEMENT COMPRENANT UN WOLLASTONITE RECOUVERT DE SILANE

(43) Veröffentlichungstag der Anmeldung: 13.12.2017
(73) Patentinhaber: ARLANXEO Deutschland GmbH, 41540 Dormagen (DE)
(72) Erfinder: Lieber, Susanna, 67663 Kaiserslautern (DE); Frenzel, Ulrich, 41542 Dormagen (DE)

(56) Entgegenhaltungen:
- US-A1- 2001 000 343
- US-A1- 2005 159 557
- US-A1- 2006 142 467
- US-A1- 2011 251 320

## Beschreibung

Die vorliegende Erfindung betrifft die Verwendung einer **vulkanisierbaren Zusammensetzung** enthaltend Kautschuk, Silan-beschichteten Wollastonit und Peroxidverbindung zur Herstellung von Vulkanisaten die in Kontakt mit Kühlmittel stehen.

Die Erfindung betrifft ferner die Verwendung eines **Vulkanisats,** hergestellt aus einer vulkanisierbaren Zusammensetzung enthaltend Kautschuk, Silan-beschichteten Wollastonit und Peroxidverbindung, als Bauteil, bevorzugt als Dichtung oder als Schlauch, das in Kontakt mit Kühlmittel steht.

Die Anforderungen an Vulkanisate zur Verwendung als Kühlerschlauch, Heizungsschlauch, Kühlergehäuse oder Kühlerdichtung werden immer höher. So müssen zur Erfüllung von Sicherheitsnormen geeignete Vulkanisate eine ausreichende Alterungsbeständigkeit sowohl in Heißluft als auch in Kühlmittel, d.h. 25 % oder weniger Änderung der Bruchdehnung nach 21 Tagen (504 Stunden) bei 150 °C in Heißluft und 25 % oder weniger Änderung der Bruchdehnung nach 21 Tagen (504 Stunden) bei 150 °C in Kühlmittel aufweisen.

Der Fachmann versteht unter **Kühlmittel** einen flüssigen Stoff oder ein Stoffgemisch, das zum Abtransport von Wärme eingesetzt wird. Das Kühlmittel ist in der Lage, in einem Kühlzyklus die Enthalpie entlang des Temperaturgradienten zu einer Stelle niedrigerer Temperatur zu transportieren. Kühlflüssigkeiten können dabei das Kühlgut direkt oder über einen Wärmetauscher kühlen.
Im Rahmen dieser Erfindung stehen Kühlmittel für Zusammensetzungen enthaltend Wasser, einen Gefrierpunktserniedriger, bevorzugt Alkylglycol oder Salze, besonders bevorzugt Ethylenglycol oder Propylenglycol, und einen Korrosionsinhibitor, bevorzugt neutralisierte organische Säuren, besonders bevorzugt Natriumethylhexanoat.
In herkömmlichen Kühlmitteln wurden früher Silikate als Zusatz eingesetzt. Das Silikat verhindert durch den Aufbau einer Al-Silikat-Schutzschicht auf Aluminiumteilen zwar Korrosion, allerdings baut es schnell ab und muss daher regelmäßig erneuert werden. Neuere Kühlmittelgenerationen enthalten daher statt des Silikats organische Verbindungen für den Korrosionsschutz, da diese länger vorhalten.
Seit einiger Zeit wird dabei die sogenannte OAT (organic acid technology) in Kühlmitteln eingesetzt. Bei dieser Technologie werden neutralisierte organische Säuren, wie zum Beispiel Natriumethylhexanoat als Zusatz verwendet. Bei erhöhter Temperatur entsteht allerdings im Laufe der Zeit aus dem Salz der Ethylhexansäure die freie Säure. Diese Säure kann zu vorzeitiger Alterung bei herkömmlichen Vulkanisaten führen. Ein Beispiel für ein Kühlmittelkonzentrat mit OAT-Technologie ist G13 von Volkswagen, das als Hauptkomponenten Ethylenglykol und Natriumethylhexanoat enthält und mit Wasser vermengt ein erfindungsgemäßes Kühlmittel ergibt.

Es besteht somit eine Nachfrage nach Vulkanisaten, die die hohen Anforderungen an die Alterungsbeständigkeit sowohl in Heißluft als auch in Kühlmittel erfüllen. Insbesondere ist eine hohe Alterungsbeständigkeit in solchen Kühlmitteln erstrebenswert, die hohe Mengen an organischen Säuren wie beispielsweise 2-Ethylhexansäure oder Sebacinsäure aufweisen. Darüber hinaus müssen die weiteren typischen Gummieigenschaften wie etwa Zugfestigkeit, Dehnung und Druckverformungsrest verglichen mit herkömmlichen Standardtypen ausreichend gut sein.

WO-A-2010/030860 offenbart in den Beispielen 2 und 3 eine vulkanisierbare Zusammensetzung auf Basis von hydriertem Nitrilkautschuk (HNBR) enthaltend Silan-beschichteten Wollastonit (400 Wollastocoat 10022), einen Säureakzeptor, ein Metallsalz und einen Stabilisator. Diese Zusammensetzung weist eine schnelle Vulkanisation auf sowie verbesserte Verarbeitbarkeit, Hitzestabilität und einen **niedrigen Druckverformungsrest.** Die Zusammensetzung des Beispiels 3 weist zusätzlich auch eine verringerte und somit verbesserte Quellung in Wasser auf. WO-A-2010/030860 weist sowohl in den Zusammensetzungen des Beispiels 2 als auch in Beispiel 3 neben dem Silan-beschichteten Wollastonit Zinkoxid (ZnO) und Therban HT auf. Mit anderen Worten wird die Verwendung von vulkanisierbaren Zusammensetzungen enthaltend HNBR und Silan-beschichteten Wollastonit in Kombination mit einem Metallsalz und einem Säureakzeptor **zur Erhöhung der Alterungsstabilität** beschrieben. Die WO-A-2010/030860 liefert keinen Hinweis auf die Verwendung der vulkanisierbaren Zusammensetzung und ihrer Vulkanisate in Kontakt mit Kühlmittel sowie deren Beständigkeit gegenüber Kühlmitteln.

WO-A-2015/146862 offenbart HNBR Zusammensetzungen enthaltend 3 bis 20 phr Wollastonit sowie 72 bis 87 phr Ruß für Abriebfestigkeit und Druckbeständigkeit. Die Verwendung dieser Zusammensetzungen in Kontakt mit Kühlmitteln und ihr Quellverhalten darin sind nicht offenbart.

CN-A-103408810 offenbart eine Dichtung basierend auf einer Zusammensetzung enthaltend unter anderem Nitrilkautschuk (NBR) und modifizierten Wollastonit mit verbesserten mechanischen Eigenschaften sowie verbesserter Abriebfestigkeit und Wärmebeständigkeit. Die Verwendung dieser Zusammensetzung in Kontakt mit Kühlmitteln und deren Quellverhalten darin sind nicht offenbart.

KR20130003554 offenbart eine Dichtungszusammensetzung enthaltend HNBR und Ethylenglycol als Frostschutzadditiv. Silan-beschichteter Wollastonit wird nicht offenbart.

US 2011/251320 A1 offenbart in den Beispielen eine vulkanisierbare Zusammensetzung enthaltend
(a) einen hydrierten Nitrilkautschuk (92 + 15 bzw. 100 Teile Therban),
(b) einen silanbeschichteten Wollastonit (je 30 Teile Wollastocoat 10022) und
(c) eine Peroxidverbindung (bis(t-Butylperoxy)diisopropylbenzol.
   sowie je 3 Teile Zinkoxid.

US 2001/000343 A1 offenbart Vulkanisate, hergestellt aus einer vulkanisierbaren Zusammensetzung, weiche
(a) ein Fluorelastomer,
(b) einen silanbeschichteten Wollastonit, und
(c) eine Peroxidverbindung enthält.

US 2005/159557 A1 offenbart Zusammensetzungen, enthaltend
(a) ein Fluorelastomer,
(b) eine Peroxidverbindung, und
(c) mindestens einen mineralischen Füllstoff, z.B. Wollastonit.

US 2006/142467 A1 offenbart eine Kautschukzusammensetzung, die eine vernetzte Fluorelastomer-Mischung enthält, die in einer thermoplastischen Materialmischung dispergiert ist.

Allen Dokumenten des Standes der Technik ist gemein, dass keine vulkanisierbaren Zusammensetzungen auf Basis von HNBR bekannt sind, die den aktuellen, hohen Anforderungen der Anwendung in Kontakt mit Kühlmitteln entsprechen.

Die Aufgabe der vorliegenden Erfindung war es somit, vulkanisierbare Zusammensetzungen zur Herstellung von Vulkanisaten bereitzustellen, die eine **Alterungsbeständigkeit** von 25 % oder weniger Änderung der Bruchdehnung nach 21 Tagen (504 Stunden) bei 150°C in Heißluft und 25 % oder weniger Änderung der Bruchdehnung nach 21 Tagen (504 Stunden) bei 150 °C in Kühlmittel aufweisen, und somit in Kontakt mit Kühlmitteln mit OAT Technologie verwendet werden können.
In einer weiteren Aufgabe werden bevorzugt solche vulkanisierbaren Zusammensetzungen bereitgestellt, die zu Vulkanisaten führen, die eine **vergleichbare oder verbesserte Quellung** in Kühlmittel aufweisen als vulkanisierbare Zusammensetzungen des Standes der Technik.
In einer weiteren Aufgabe werden besonders bevorzugt solche vulkanisierbaren Zusammensetzungen bereitgestellt, die zu Vulkanisaten führen, die zusätzlich eine **Shore A Härte von weniger als 70** aufweisen, damit das Material ausreichend elastisch ist.

Überraschenderweise wurde gefunden, dass durch Kombination von Kautschuk mit Silan-beschichtetem Wollastonit und Peroxidverbindungen Zusammensetzungen erhalten werden, die zu Vulkanisaten führen, die die genannten Anforderungen erfüllen und somit für die Verwendung in Kontakt mit Kühlmitteln geeignet sind.

**Gegenstand der Erfindung** ist die **Verwendung** einer vulkanisierbaren Zusammensetzung, zur Herstellung eines Vulkanisats, das mit Kühlmittel in Kontakt steht, dadurch gekennzeichnet, dass die vulkanisierbare Zusammensetzung
(a) mindestens einen Kautschuk, bevorzugt mindestens einen hydrierten Nitrilkautschuk oder EPDM, besonders bevorzugt hydrierten Nitrilkautschuk
(b) mindestens einen Silan-beschichteten Wollastonit, bevorzugt mindestens einen Vinylsilan-beschichteten Wollastonit, und
(c) mindestens eine Peroxidverbindung
   enthält.
   Diese Lösung war insofern überraschend, als nicht jede vulkanisierbare Zusammensetzung, die bereits für gute Alterungsbeständigkeit oder gute Kühlmittelbeständigkeit bekannt war, für die hohen Anforderungen an die Verwendung von Vulkanisaten im Kontakt mit Kühlmittel geeignet ist.

Die Verwendung von vulkanisierbaren Zusammensetzungen und deren Vulkanisaten gemäß der vorliegenden Erfindung bewirkt, dass die aus den Vulkanisaten hergestellten Bauteile eine geringere Alterung aufweisen als herkömmliche Vulkanisate ohne Silan-beschichteten Wollastonit.

**Bevorzugt** ist die **Verwendung** einer vulkanisierbaren Zusammensetzung, zur Herstellung eines Vulkanisats, das mit Kühlmittel in Kontakt steht, dadurch gekennzeichnet, dass die vulkanisierbare Zusammensetzung
(a) 100 Gew.-Teile mindestens eines Kautschuks, insbesondere hydrierten Nitrilkautschuk oder EPDM, besonders bevorzugt hydrierten Nitrilkautschuk
(b) 35 bis 150 Gew.-Teile, bevorzugt 50 bis 100 Gew.-Teile mindestens eines Silan-beschichteten Wollastonites, insbesondere Epoxysilan-, Methacrylsilan- oder Vinylsilan-beschichteten Wollastonits oder Mischungen davon,
(c) 1 bis 20 Gew.-Teile, bevorzugt 2 bis 10 Gew.-Teile mindestens einer Peroxidverbindung,
(d) 0 bis 100 Gew.-Teile, bevorzugt 1 bis 80 Gew.-Teile eines oder mehrerer üblicher Kautschukadditive, bevorzugt eines oder mehrerer Füllstoffe, insbesondere Ruß, Kieselsäure, Magnesiumoxid oder Aluminiumoxid, eines oder mehrerer Füllstoffaktivatoren, insbesondere auf Basis eines organischen Silans, eines oder mehrerer Alterungsschutzmittel, insbesondere oligomerisiertes 2,2,4-Trimethyl-1,2-dihydro-chinolin (TMQ), styrolisiertes Diphenylamin (DDA), octyliertes Diphenylamin (OCD), cumyliertes Diphenylamin (CDPA) oder Zinksalz von 4- und 5-Methylmercaptobenzimidazol (Vulkanox ZMB2) oder 4- und 5-Methylmercaptobenzimidazol und/oder eines oder mehrerer Formtrennmittel oder Verarbeitungshilfsmittel bezogen auf 100 Gew.-Teile der Kautschuke (a), enthält.

**Besonders bevorzugt** ist die Verwendung von vulkanisierbaren Zusammensetzungen zur Herstellung eines Vulkanisats, das mit Kühlmittel in Kontakt steht enthaltend
(a) 100 Gew.-Teile eines hydrierten Nitrilkautschuks,
(b) 35 bis 150 Gew.-Teile, bevorzugt 50 bis 100 Gew.-Teile mindestens eines Silan-beschichteten Wollastonites, insbesondere Epoxysilan-, Methacrylsilan- oder Vinylsilan-beschichteten Wollastonites oder Mischungen davon,
(c) 1 bis 20 Gew.-Teile, bevorzugt 2 bis 10 Gew.-Teile mindestens einer Peroxidverbindung,
(d) 0 bis 100 Gew.-Teile, bevorzugt 1 bis 80 Gew.-Teile eines oder mehrerer üblicher Kautschukadditive, bevorzugt eines oder mehrerer Füllstoffe, insbesondere Ruß, Kieselsäure, Magnesiumoxid oder Aluminiumoxid, eines oder mehrerer Füllstoffaktivatoren, insbesondere auf Basis eines organischen Silans, eines oder mehrerer Alterungsschutzmittel, insbesondere oligomerisiertes 2,2,4-Trimethyl-1,2-dihydro-chinolin (TMQ), styrolisiertes Diphenylamin (DDA), octyliertes Diphenylamin (OCD), cumyliertes Diphenylamin (CDPA) oder Zinksalz von 4- und 5-Methylmercaptobenzimidazol (Vulkanox ZMB2) oder 4- und 5-Methylmercaptobenzimidazo und/oder eines oder mehrerer Formtrennmittel oder Verarbeitungshilfsmittel.

Die erfindungsgemäße Verwendung der vulkanisierbaren Zusammensetzungen bewirkt, dass eine vergleichbar geringe Quellung des Vulkanisats im Kühlmittel und eine geringere Änderung der Dehnung des Vulkanisats bei Lagerung in Heißluft und Kühlmittel auftritt im Vergleich zu bekannten vulkanisierbaren Zusammensetzungen.

Als **Komponente (a)** wird mindestens ein typischer Kautschuk eingesetzt. Kautschuk als Komponente (a) ist beispielsweise Nitrilkautschuk (NBR), hydrierter Nitrilkautschuk (HNBR), Ethylen-Propylen-Kautschuk (EPM), Ethylen-Propylen-Dien-Kautschuk (EPDM), Ethylen-Vinylacetat (EVA; EVM), Naturkautschuk (NR), Chloropren-Kautschuk (BR), Butylkautschuk (IIR), Polyisopren-Kautschuk (IR), Styrol-Butadienkautschuk (SBR), Chloropren-Kautschuk (CR), Ethylen-Acrylat-Kautschuk (AEM) oder Acrylat-Kautschuk (ACM) sowie beliebige Mischungen der zuvor genannten Kautschuke.

Die Verwendung von hydriertem Nitrilkautschuk, EPM oder EPDM als Komponente (a) ist bevorzugt

Die Verwendung von hydriertem Nitrilkautschuk als Komponente (a) ist besonders bevorzugt.

Möglich ist auch die Verwendung eines Blends von hydriertem Nitrilkautschuk mit Ethylen-Vinylacetat-Kautschuk, bevorzugt können dabei bis zu 20 Teile HNBR durch die gleiche Menge EVM ersetzt werden.

Die Mooney-Viskosität (ML 1+4 gemessen bei 100°C) des eingesetzten Kautschuks (a) oder, sofern mehrere Kautschuke (a) eingesetzt werden, der gesamten Mischung aller Kautschuke (a) liegt in einem Bereich von 10 bis 120, bevorzugt in einem Bereich von 20 bis 110, besonders bevorzugt in einem Bereich von 30 bis 100. Die Bestimmung der Mooney-Viskosität erfolgt dabei gemäß ASTM Norm D 1646.

Die genannten Kautschuke (a) sind teilweise kommerziell erhältlich, aber ferner in allen Fällen nach dem Fachmann über die Literatur zugänglichen Herstellverfahren zugänglich.

Unter **hydrierten Nitrilkautschuken** (HNBR) sind im Rahmen dieser Anmeldung Co- und/oder Terpolymere auf der Basis mindestens eines konjugierten Diens und mindestens eines α,β-ungesättigten Nitrilmonomeren sowie gegebenenfalls weiterer copolymerisierbarer Monomeren zu verstehen, bei denen die einpolymerisierten Dieneinheiten ganz oder teilweise hydriert sind.

Unter "Hydrierung" oder "hydriert" wird im Rahmen dieser Anmeldung eine Umsetzung der im Nitrilkautschuk ursprünglich vorhandenen Doppelbindungen zu mindestens 50 %, bevorzugt mindestens 85 %, besonders bevorzugt mindestens 95 % verstanden.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Das **konjugierte Dien** kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Die Anteile an konjugiertem Dien und α,β-ungesättigtem Nitril in den hydrierten Nitrilkautschuken können in weiten Bereichen variiert werden. Der Anteil des oder der Summe der konjugierten Diene liegt üblicherweise im Bereich von 40 bis 90 Gew.-% und bevorzugt im Bereich von 50 bis 80 Gew.-%, bezogen auf das Gesamtpolymer. Der Anteil des oder der Summe der α,β-ungesättigten Nitrile liegt üblicherweise im Bereich von 10 bis 60 Gew.-% und bevorzugt im Bereich von 20 bis 50 Gew.-%, bezogen auf das Gesamtpolymer. Die zusätzlichen Monomere können in Mengen im Bereich von 0,1 bis 40 Gew.-%, bevorzugt im Bereich von 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Die Herstellung solcher hydrierter Nitrilkautschuke, die für die erfindungsgemäßen vulkanisierbaren Zusammensetzungen geeignet sind, ist dem Fachmann hinlänglich geläufig.

Die zunächst erfolgende Herstellung der Nitrilkautschuke durch Polymerisation der vorgenannten Monomere ist in der Literatur (z.B. Houben-Weyl, Methoden der Organischen Chemie Bd.14/1, Georg Thieme Verlag Stuttgart 1961) umfangreich beschrieben.

Die anschließende Hydrierung der vorstehend beschriebenen Nitrilkautschuke zu hydriertem Nitrilkautschuk kann in der dem Fachmann bekannten Art und Weise erfolgen.

Es ist prinzipiell möglich, die Hydrierung von Nitrilkautschuken unter Einsatz homogener oder heterogener Hydrierkatalysatoren durchzuführen.

Wie in WO-A-01/77185 beschrieben, ist es beispielsweise möglich, die Umsetzung mit Wasserstoff unter Einsatz homogener Katalysatoren, wie z.B. dem als "Wilkinson"-Katalysator ((PPh₃)₃RhCl) bekannten oder anderen durchzuführen. Verfahren zur Hydrierung von Nitrilkautschuk sind bekannt. Rhodium oder Titan werden üblicherweise als Katalysatoren verwendet, wobei aber auch Platin, Iridium, Palladium, Rhenium, Ruthenium, Osmium, Kobalt oder Kupfer entweder als Metall, oder aber bevorzugt in Form von Metallverbindungen eingesetzt werden können (siehe z.B. US-A-3,700,637, DE-A-25 39 132, EP-A-134 023, DE-OS-35 41 689, DE-OS-35 40 918, EP-A-298 386, DE-OS-35 29 252, DE-OS-34 33 392, US-A-4,464,515 und US-A-4,503,196).

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium-haltigen Katalysators erreicht werden. Einsetzbar ist beispielsweise ein Katalysator der allgemeinen Formel

(R¹ₘB)ₗRhXₙ

worin
- R¹: gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen,
- B: Phosphor, Arsen, Schwefel oder eine Sulfoxid-Gruppe S=O bedeutet,
- X: Wasserstoff oder ein Anion, vorzugsweise Halogen und besonders bevorzugt Chlor oder Brom, bedeutet
- l: 2,3 oder 4 ist
- m: 2 oder 3 ist und
- n: 1,2 oder 3, bevorzugt 1 oder 3 ist.

Bevorzugte Katalysatoren sind Tris(triphenylphosphin)-rhodium(I)-chlorid, Tris(triphenyl-phosphin)-rhodium(III)-chlorid und Tris(dimethylsulfoxid)-rhodium(III)-chlorid sowie Tetrakis- (triphenylphosphin)-rhodium-hydrid der Formel ((C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01 bis 1 Gew.-%, bevorzugt im Bereich von 0,03 bis 0,5 Gew.-% und besonders bevorzugt im Bereich von 0,1 bis 0,3 Gew.-% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl-, Tricycloalkyl-, Triaryl-, Triaralkyl-, Diarylmonoalkyl-, Diarylmonocycloalkyl-, Dialkylmonoaryl-, Dialkyl-monocycloalkyl-, Dicycloalkylmonoaryl- oder Dicyclalkylmonoaryl-Resten.

Beispiele für Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3 bis 5 Gew.-%, besonders bevorzugt im Bereich von 0,5 bis 4 Gew.-%, bezogen auf das Gewicht des zu hydrierenden Nitrilkautschuks eingesetzt. Bevorzugt ist ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneter Weise 0,1 bis 33 Gewichtsteile des Co-Katalysators, bevorzugt 0,5 bis 20 und ganz besonders bevorzugt 1 bis 5 Gewichtsteile, insbesondere mehr als 2 aber weniger als 5 Gewichtsteile Co-Katalysators bezogen auf 100 Gewichtsteile des zu hydrierenden Nitrilkautschuks eingesetzt.

Die praktische Durchführung solcher Hydrierungen ist dem Fachmann z.B. aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 °C bis 150 °C und einem Druck im Bereich von 50 bar bis 150 bar für 2 Stunden bis 10 Stunden mit Wasserstoff beaufschlagt.

Bei Einsatz heterogener Katalysatoren zur Herstellung hydrierter Nitrilkautschuke durch Hydrierung der entsprechenden Nitrilkautschuke handelt es sich üblicherweise um geträgerte Katalysatoren auf der Basis von Palladium.

Die **Mooney-Viskosität** (ML 1+4 gemessen bei 100 °C) des eingesetzten hydrierten Nitrilkautschuks (a) oder, sofern mehrere hydrierte Nitrilkautschuke (a) eingesetzt werden, der gesamten Mischung aller hydrierten Nitrilkautschuke (a) liegt in einem Bereich von 10 bis 120, bevorzugt in einem Bereich von 15 bis 100. Die Bestimmung der Mooney-Viskosität erfolgt dabei gemäß ASTM Norm D 1646.

Der erfindungsgemäße hydrierte Nitrilkautschuk weist einen **Gehalt an Restdoppelbindungen (RDB)** von 10 % oder weniger, bevorzugt von 7 % oder weniger, besonders bevorzugt von 1 % oder weniger auf.

Die in der erfindungsgemäßen vulkanisierbaren Zusammensetzung einsetzbaren hydrierten Nitrilkautschuke besitzen eine **Glastemperatur** kleiner -10 °C, bevorzugt kleiner -15 °C, besonders bevorzugt kleiner -20 °C gemessen über DSC bei einer Heizrate von 20 K/min.

Beispiele für kommerziell erhältliche hydrierte Nitrilkautschuke sind voll- und teilhydrierte Nitrilkautschuke mit Acrylnitrilgehalten im Bereich 17 bis 50 Gew.-% (Therban®-Palette der ARLANXEO Deutschland GmbH sowie Zetpol®-Palette der Nippon Zeon Corporation). Ein Beispiel für hydrierte Butadien/Acrylnitril/AcrylatPolymere ist die Therban® LT-Serie der ARLANXEO Deutschland GmbH, beispielsweise Therban® LT 2157 sowie Therban® LT 2007. Ein Beispiel für carboxylierte hydrierte Nitrilkautschuke ist die Therban® XT-Serie der ARLANXEO Deutschland GmbH. Ein Beispiel für hydrierte Nitrilkautschuke mit geringen Mooney-Viskositäten und daher verbesserter Verarbeitbarkeit ist ein Produkt aus der Therban® AT-Serie, beispielweise Therban® AT 3404.

Der **hydrierte Nitrilkautschuk** kann neben Wiederholungseinheiten mindestens eines ungesättigten Nitrils und mindestens eines konjugierten Diens ein oder mehrere weitere einpolymerisierbare Monomere in Form von **Carbonsäuren** oder **Carbonsäureester** enthalten.

Geeignete einpolymerisierbare Carbonsäuren sind Mono- oder Dicarbonsäuren mit 3 bis 18 C-Atomen, die in α,β-Position ungesättigt sind, und deren Ester. Bevorzugte α,β-ungesättigte Carbonsäuren sind Acrylsäure, Methacrylsäure, Itaconsäure, Fumarsäure, Maleinsäure, Crotonsäure und Mischungen davon.

Ester der α,β-ungesättigten Carbonsäuren mit 3 bis 18 C-Atomen umfassen vorzugsweise die Alkylester und die Alkoxyalkylester der zuvor genannten Carbonsäuren. Bevorzugte Ester der α,β-ungesättigten Carbonsäuren mit 3 bis 18 C-Atomen sind Methylacrylat, Ethylacrylat, Butylacrylat, 2-Ethylhexylacrylat, Octylacrylat und Polyethylenglycol-(Meth)acrylat (PEG-(Meth)acrylat) mit 1 bis 8 Ethylenglycol-Wiederholungseinheiten. Bevorzugte Alkoxyalkylester sind Polyethylenglycol-(Meth)acrylat (PEG-(Meth)acrylat) mit 1 bis 8 Ethylenglycol-Wiederholungseinheiten und Butylacrylate.

Bevorzugte Ester der α,β-ethylenisch ungesättigte Dicarbonsäure Monoester sind beispielsweise
∘ Alkyl-, insbesondere C₄-C₁₈-Alkyl-, bevorzugt n-Butyl-, tert.-Butyl-, n-Pentyl- oder n-Hexyl-, besonders bevorzugt Mono-n-butylmaleat, Mono-n-butylfumarat, Mono-n-butylcitraconat, Mono-n-butylitaconat;
∘ Alkoxyalkyl-, insbesondere C₁-C₁₈-Alkoxyalkyl-, bevorzugt C₄-C₁₂-Alkoxyalkyl-,
∘ Polyethylenglycolester (PEG) mit 1 bis 8 Ethylenglycol-Wiederholungseinheiten
∘ Hydroxyalkyl-, insbesondere C₄-C₁₈-Hydroxyalkyl-, bevorzugt C₄-C₁₂-Hydroxyalkyl-,
∘ Cycloalkyl-, insbesondere C₅-C₁₈-Cycloalkyl-, bevorzugt C₆-C₁₂-Cycloalkyl, besonders bevorzugt Monocyclopentylmaleat, Monocyclohexylmaleat, Monocycloheptylmaleat, Monocyclopentylfumarat, Monocyclohexylfumarat, Monocycloheptylfumarat, Monocyclopentylcitraconat, Monocyclohexylcitraconat, Monocycloheptylcitraconat, Monocyclopentylitaconat, Monocyclohexylitaconat und Monocycloheptylitaconat,
∘ Alkylcycloalkyl-, insbesondere C₆-C₁₂-Alkylcycloalkyl-, bevorzugt C₇-C₁₀-Alkylcycloalkyl, besonders bevorzugt Monomethylcyclopentylmaleat und Monoethylcyclohexylmaleat, Monomethylcyclopentylfumarat und Monoethylcyclohexylfumarat, Monomethylcyclopentylcitraconat und Monoethylcyclohexylcitraconat; Monomethylcyclopentylitaconat und Monoethylcyclohexylitaconat;
∘ Aryl-, insbesondere C₆-C₁₄-Aryl-Monoester, bevorzugt Maleinsäuremonoarylester, Fumarsäuremonoarylester, Citraconsäuremonoarylester oder Itaconsäuremonoarylester, besonders bevorzugt Monophenylmaleat oder Monobenzylmaleat, Monophenylfumarat oder Monobenzylfumarat, Monophenylcitraconat oder Monobenzylcitraconat, Monophenylitaconat oder Monobenzylitaconat oder Mischungen davon,
∘ ungesättigte Polycarboxylsäurepolyalkylester wie beispielsweise Dimethylmaleat, Dimethylfumarat, Dimethylitaconate oder Diethylitaconate; oder
∘ aminogruppenhaltige α,β-ethylenisch ungesättigte Carboxylsäureester wie beispielsweise Dimethylaminomethylacrylat oder Diethylaminoethylacrylat.

### Komponente (b) - Silan-beschichteter Wollastonit

Die erfindungsgemäße vulkanisierbare Zusammensetzung enthält als Komponente (b) mindestens einen Silan-beschichteten Wollastonit.

Die **Silane,** die zur Beschichtung der Wollastonite verwendet werden, sind Silane mit zumindest einer Funktionalisierung, die mit der Füllstoffoberfläche reagieren kann und bevorzugt mit einer zweiten Funktionalisierung, welche nach der Vulkanisation den modifizierten Füllstoff mit der Polymermatrix verbindet, wie beispielsweise Vinylgruppen.
Bevorzugte Silane sind Epoxysilan, Methacrylsilan, Vinylsilan oder Aminosilan. Besonders bevorzugte Silane sind Epoxysilan, Methacrylsilan und Vinylsilan.
Ganz besonders bevorzugtes Silan ist Vinylsilan.

Zusammensetzungen enthaltend Kautschuk, Peroxidverbindung und Wollastonit mit Vinylsilan-Beschichtung führen zu einer weiteren Verbesserung der Alterung. Vulkanisate mit Vinylsilan-beschichtetem Wollastonit weisen nach Alterung für 1008 Stunden in G13 die beste Balance zwischen Änderung der Bruchdehnung, Volumenquellung und Änderung der Zugfestigkeit auf und sind somit besser als Vulkanisate mit Epoxysilan-beschichtetem Wollastonit oder Methacylsilanbeschichtetem Wollastonit.

**Wollastonite** sind natürlich vorkommende Calciumsilikat-Mineralien der Formel CaSiO₃. Wollastonite haben eine weiße Farbe und einen basischen pH-Wert von größer 7. Die in den Beispielen verwendeten Wollastonite haben ein Seitenverhältnis (Aspect ratio) von 3:1 bis 5:1. Silan-beschichteter Wollastonit ist kommerziell erhältlich unter dem Markennamen Tremin® der Firma Quarzwerke.

In den erfindungsgemäßen Zusammensetzungen werden, bezogen auf 100 Gew.-Teile der Kautschuke (a), 35 bis 150 Gew.-Teile, besonders bevorzugt 50 bis 100 Gew.-Teile mindestens eines Silan-beschichteten Wollastonites verwendet.

### Komponente (c) - Peroxidverbindung

Als **Komponente (c)** wird mindestens eine Peroxidverbindung als Vernetzungsmittel eingesetzt.

Als Peroxidverbindung (c) sind beispielsweise die folgenden **Peroxidverbindungen** geeignet:
Bis-(2,4-dichlorbenzoyl)-peroxid, Dibenzoylperoxid, Bis-(4-chlorbenzoyl)peroxid, 1,1-Bis-(tert-butylperoxy)-3,3,5-trimethylcyclohexan, tert-Butylperbenzoat, 2,2-Bis-(tert-butylperoxy)-buten, 4,4-Di-tert-butylperoxynonylvalerat, Dicumylperoxid, 2,5-Dimethyl-2,5-di-(tert-butylperoxy)-hexan, tert-Butylcumylperoxid, 1,3-Bis-(tert-butylperoxyisopropyl)-benzol, Di-tert-butylperoxid, 2,5-Dimethyl-2,5-di(tert-butylperoxy)-hexin, tert-Butylhydroperoxid, Wasserstoffperoxid, Methylethylketonperoxid, Lauroylperoxid, Decanoylperoxid, 3,5,5-Trimethyl-hexanoylperoxid, Di-(2-ethylhexyl)-peroxydicarbonat, Poly(tert-butyl peroxycarbonat), Ethyl-3,3-di-(tert-butylperoxy)-butyrat, Ethyl-3,3-di-(tert-amylperoxy)-butyrat, n-Butyl-4,4-di-(tert-butylperoxy)-valerat, 2,2-Di-(tert-butylperoxy)-butan, 1,1-Di-(tert-butylperoxy)-cyclohexan, 3,3,5-Tri-methylcyclohexan, 1,1-Di-(tert-amylperoxy)cyclohexan, tert-Butyl-peroxybenzoat, tert-Butyl-peroxyacetat, tert-Butyl-peroxy-3,5,5-trimethylhexanoat, tert-Butyl peroxyisobutyrat, tert-Butyl-peroxy-2-ethylhexanoat, tert-Butyl-peroxypivalat, tert-Amyl-peroxypivalat, tert-Butyl-peroxyneodecanoat, Cumylperoxyneodecanoat, 3-Hydroxy-1,1-di-methylbutyl-peroxyneodecanoat, tert-Butylperoxybenzoat, tert-Butyl-peroxyacetat, tert-Amyl-peroxy-3,5,5-trimethylhexanoat, tert-Butyl-peroxyisobutyrat, tert-Butyl-peroxy-2-ethylhexanoat, Cumylperoxyneodecanoat, 3-Hydroxy-1,1-di-methylbutyl-peroxy-neodecanoat, 2,5-Dimethyl-2,5-di-(tert-butyl-peroxy)-hexyn-(3-di-tert-amyl)-peroxid, 2,5-Dimethyl-2,5-di-(tert-butylperoxy)-hexan, tert-Amyl-hydroperoxid, Cumolhydroperoxid, 2,5-Dimethyl-2,5-di-(hydroperoxy)-hexan, Diisopropylbenzol-monohydroperoxid sowie Kaliumperoxodisulfat.

Die mindestens eine Peroxidverbindung der erfindungsgemäßen vulkanisierbaren Zusammensetzung ist vorzugsweise ein organisches Peroxid, insbesondere Dicumylperoxid, tert-Butylcumylperoxid, Bis-(tert-butyl-peroxy-isopropyl)benzol, Di-tert-butylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl)peroxid, tert-Butylperbenzoat, 4,4-Di(tert-butylperoxy)valeriansäurebutylester und/oder 1,1-Bis(tert-butylperoxy)-3,3,5-trimethylcyclohexan bedeutet.

Die Komponente (c) liegt in den erfindungsgemäßen vulkanisierbaren Zusammensetzungen bevorzugt in einer Menge von **1 bis 20 Gew.-Teilen,** besonders bevorzugt in einer Menge von **2 bis 10 Gew.-Teilen,** bezogen auf 100 Gew.-Teile der Kautschuke (a), vor.

Darüber hinaus kann die vulkanisierbare Zusammensetzung weitere Kautschukadditive enthalten. Übliche Kautschukadditive schließen beispielsweise ein: Polymere, die nicht unter die erfindungsgemäße Definition der Komponente (a) fallen, Füllstoffaktivatoren, Öle, insbesondere Verarbeitungsöle oder Extenderöle, Weichmacher, Verarbeitungshilfsmittel, Beschleuniger, multifunktionelle Vernetzer, Alterungsschutzmittel, Ozonschutzmittel, Antioxidationsmittel, Formtrennmittel, Retarder, weitere Stabilisatoren und Antioxidantien, Farbstoffe, Fasern umfassend organische und anorganische Fasern sowie Faserpulpe, Vulkanisationsaktivatoren, und zusätzliche polymerisierbare Monomere, Dimere, Trimere oder Oligomere.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyltrimethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin oder Ethylenglycole mit Molekulargewichten von 74 bis 10.000 g/mol dar. Die Menge an Füllstoffaktivatoren beträgt üblicherweise 0,5 bis 10 Gew.-Teile, bezogen auf 100 Gew.-Teile der Kautschuke (a).

Als **Alterungsschutzmittel** kommen insbesondere solche in Frage, die bei der peroxidischen Vulkanisation möglichst wenig Radikale abfangen. Dies sind insbesondere oligomerisiertes 2,2,4-Trimethyl-1,2-dihydro-chinolin (TMQ), styrolisiertes Diphenylamin (DDA), octyliertes Diphenylamin (OCD) cumyliertes Diphenylamin (CDPA), 4- und 5-Methylmercaptobenzimidazol (MB2) oder Zinksalz von 4- und 5-Methylmercaptobenzimidazol (ZMB2). Daneben können auch die bekannten phenolischen Alterungsschutzmittel eingesetzt werden, wie sterisch gehinderte Phenole bzw. Alterungsschutzmittel auf Basis von Phenylendiamin. Es können auch Kombinationen der genannten Alterungsschutzmittel eingesetzt werden, bevorzugt CDPA in Kombination mit ZMB2 oder MB2, besonders bevorzugt CDPA mit MB2.

Die **Alterungsschutzmittel** werden üblicherweise in Mengen von 0,1 bis 5 Gew.-Teile, bevorzugt von 0,3 bis 3 Gew.-Teile, bezogen auf 100 Gew.-Teile der Kautschuke (a) eingesetzt.

Als **Formtrennmittel** kommen beispielsweise in Betracht: Gesättigte oder teilweise ungesättigte Fett- und Ölsäuren oder deren Derivate (in Form von Fettsäureestern, Fettsäuresalzen, Fettalkoholen oder Fettsäureamiden), weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von 0,2 bis 10 Gew.-Teile, bevorzugt 0,5 bis 5 Gew.-Teile, bezogen auf 100 Gew.-Teile der Kautschuke (a) eingesetzt.

Auch die Verstärkung der Vulkanisate mit Festigkeitsträgern aus Glas nach der Lehre von US-A-4,826,721 ist möglich sowie die Verstärkung mit aromatischen Polyamiden (Aramid).

In einer bevorzugten Ausführungsform wird eine vulkanisierbare Zusammensetzung zur Herstellung eines Vulkanisat, das mit Kühlmittel in Kontakt steht, verwendet, dadurch gekennzeichnet, dass die vulkanisierbare Zusammensetzung
(a) 100 Gew.-Teile mindestens eines Kautschuks, bevorzugt hydrierten Nitrilkautschuks,
(b) 35 bis 150 Gew.-Teile, bevorzugt 50 bis 100 Gew.-Teile mindestens eines Silan-beschichteten Wollastonites, bevorzugt Epoxysilan-, Methacrylsilan- oder Vinylsilan-beschichteten Wollastonits oder Mischungen davon,
(c) 1 bis 20 Gew.-Teile, bevorzugt 2 bis 10 Gew.-Teile mindestens einer Peroxidverbindung,
(d) 0 bis 100 Gew.-Teile, bevorzugt 1 bis 80 Gew.-Teile eines oder mehrerer üblicher Kautschukadditive, bevorzugt eines oder mehrerer Füllstoffe, insbesondere Ruß, Kieselsäure, Magnesiumoxid oder Aluminiumoxid, eines oder mehrerer Füllstoffaktivatoren, insbesondere auf Basis eines organischen Silans, eines oder mehrerer Alterungsschutzmittel, insbesondere oligomerisiertes 2,2,4-Trimethyl-1,2-dihydro-chinolin (TMQ), styrolisiertes Diphenylamin (DDA), octyliertes Diphenylamin (OCD), cumyliertes Diphenylamin (CDPA) oder Zinksalz von 4- und 5-Methylmercaptobenzimidazol (Vulkanox ZMB2) oder 4- und 5-Methylmercaptobenzimidazol und/oder eines oder mehrerer Formtrennmittel oder Verarbeitungshilfsmittel bezogen auf 100 Gew.-Teile der Kautschuke (a) enthält,
   wobei der Gehalt an Zinkionen weniger als 1,5 Gew.-Teile bezogen auf 100 Gew.-Teile der Kautschuke (a) beträgt und die vulkanisierbare Zusammensetzung bevorzugt frei von Zinkionen ist.

Solche bevorzugten Ausführungsformen weisen eine verbesserte Heißluftalterung nach 504 Stunden bei 150 °C auf.

Eine besonders bevorzugte Ausführungsform stellt die Verwendung von vulkanisierbaren Zusammensetzungen zur Herstellung eines Vulkanisats, das mit Kühlmittel in Kontakt steht, dar, enthaltend
(a) 100 Gew.-Teile mindestens eines hydrierten Nitrilkautschukes,
(b) 50 bis 85 Gew.-Teile mindestens eines Silan-beschichteten Wollastonits,
(c) 2 bis 10 Gew.-Teile mindestens einer Peroxidverbindung,
wobei die Zusammensetzung einen Gehalt an Zinkionen von weniger als 1,5 Gew.-Teile bezogen auf 100 Gew.-Teile der Kautschuke (a) aufweist.

**Gegenstand der Erfindung** ist ferner ein **Verfahren zur Herstellung** der vorgenannten erfindungsgemäßen vulkanisierbaren Zusammensetzungen, indem man alle Komponenten (a), (b) und (c) sowie gegebenenfalls (d) mischt. Dies kann unter Einsatz von dem Fachmann bekannten Vorrichtungen und Mischapparaturen erfolgen.

Die Reihenfolge, in der die Komponenten miteinander gemischt werden, ist nicht von grundlegender Bedeutung, sondern wird jeweils abgestimmt auf die zur Verfügung stehenden Mischaggregate und Temperaturführung.

Die Mischung der Komponenten (a), (b) und (c) und gegebenenfalls (d) kann dabei, je nach Temperatur, unter Verwendung der typischen, in der Kautschukindustrie gängigen Mischsystemen erfolgen. Einsatzbar sind i) diskontinuierlich mischende Aggregate in Form von Mischwalzen oder Innenmischern sowie ii) kontinuierlich mischende Aggregate wie Mischextruder.

Besonders bewährt hat es sich, die Mischung der Komponenten (a), (b) und (c) sowie gegebenenfalls (d) bei einer vorgegebenen Mischertemperatur im Bereich von ca. 30 bis 40 °C durchzuführen, da hier mit den oben genannten, in der kautschukverarbeitenden Industrie gängigen Mischaggregaten genügend hohe Scherkräfte appliziert können, um eine gute Durchmischung zu erreichen.

Bevorzugt wird der Kautschuk (a) vorgelegt, mastiziert, und danach alle weiteren Komponenten bis auf die Vulkanisationschemikalien (Peroxidverbindung und Coagens) hinzugefügt. Nach angemessener Mischzeit wird die Mischung ausgeworfen.
Die Peroxidverbindung und das Coagens wird in einem zweiten Schritt auf einer Walze eingemischt. (Die Drehzahl der Walze wird dabei so gesteuert, dass stabile Felle erhalten werden..

In der Praxis erhält man nach dem Mischen der erfindungsgemäßen Komponenten die vulkanisierbaren Zusammensetzungen z.B. in Form sogenannter "Felle", Fütterstreifen oder Fütterkörper, oder auch als Pellets oder Granulate. Dies können anschließend in Formen gepresst oder spritzgegossen werden und werden entsprechend den eingesetzten Radikalspendern bei geeigneten Bedingungen vernetzt.

**Gegenstand der Erfindung** ist ferner die **Herstellung von Vulkanisaten,** indem man die zuvor genannten vulkanisierbare Zusammensetzungen der einem Energieeintrag, insbesondere einer Temperaturbehandlung, unterwirft.

Der Energieeintrag kann beispielsweise in Form von thermischer Energie erfolgen. Die Herstellung der vulkanisierten Erzeugnissen mittels Temperaturbehandlung wird durchgeführt, indem man die erfindungsgemäßen vulkanisierbaren Zusammensetzungen in üblicher Weise in geeigneten Formwerkzeugen einer Temperatur im Bereich von bevorzugt 120 bis 200 °C, besonders bevorzugt von 140 bis 180 °C aussetzt. Die Vulkanisation kann mit Hilfe eines beliebigen Verfahrens, wie Pressvulkanisieren, Dampfvulkanisieren und dergleichen, bewirkt werden.

Im Rahmen der Vernetzung der erfindungsgemäßen vulkanisierbaren Zusammensetzung führen die Peroxidverbindungen (c) zu einer radikalischen Vernetzung zwischen und mit den eingesetzten Kautschuken (a).

**Gegenstand der Erfindung** sind ferner auch die **vernetzten Kautschuke, d.h. Vulkanisate,** die durch Vernetzung der zuvor genannten vulkanisierbaren Zusammensetzungen erhältlich sind sowie die Verwendung von Vulkanisaten zur Herstellung eines Bauteils das mit Kühlmittel in Kontakt steht.

Insbesondere ist Gegenstand der Erfindung die Verwendung eines **Vulkanisats,** hergestellt aus einer vulkanisierbaren Zusammensetzung zur Herstellung eines Bauteils, von dem zumindest das Vulkanisat mit **Kühlmittel** in Kontakt steht, dadurch gekennzeichnet, dass die vulkanisierbare **Zusammensetzung**
(a) mindestens einen Kautschuk, bevorzugt mindestens einen hydrierten Nitrilkautschuk oder EPDEM, besonders bevorzugt hydrierter Nitrilkauitschuk,
(b) mindestens einen Silan-beschichteten Wollastonit, bevorzugt mindestens einen Vinylsilan-beschichteten Wollastonit, und
(c) mindestens eine Peroxidverbindung enthält.

**Gegenstand der Erfindung** sind ferner auch **Bauteile** umfassend ein Vulkanisat das in Kontakt mit einem Kühlmittel steht, hergestellt aus einer vulkanisierbaren Zusammensetzung, dadurch gekennzeichnet, dass die vulkanisierbare Zusammensetzung
(a) mindestens einen hydrierten Nitrilkautschuk oder EPDM, besonders bevorzugt hydrierten Nitrilkautschuk,
(b) mindestens einen Silan-beschichteten Wollastonit, bevorzugt mindestens einen Vinylsilan-beschichteten Wollastonit, und
(c) mindestens eine Peroxidverbindung enthält.

Bevorzugt handelt es sich bei diesen Bauteilen um Dichtungen, Kühierdichtungen, Schläuche, Kühlerschläuche, Kraftfahrzeug-Kühlwasserschläuche, Heizungsschläuche und Kühlergehäuse.

Die durch das Vulkanisieren der vulkanisierbaren Zusammensetzung erhaltenen Vulkanisate kann durch ein übliches Verfahren zu einem Kühlerschlauch, einem Heizungsschlauch, einem Kühlergehäuse, einer Kühlerdichtung oder dergleichen verarbeitet werden, und diese Produkte sind besonders ausgezeichnete Produkte mit den vorstehend beschriebenen Eigenschaften. Insbesondere weisen solche Vulkanisate eine verbesserte Alterungsbeständigkeit auf.

Gegenstand der Erfindung ist somit ferner die **Verwendung** von 35 bis 150 Gew.-Teile Silan-beschichtetem Wöllastonit, bevorzugt Vinylsilan-beschichtetem Wollastonit, bezogen auf 100 Gew.-Teile der Kautschuke (a) in einer vulkanisierbaren Zusammensetzung enthaltend mindestens einen Kautschuk (a) und mindestens eine Peroxidverbindung (c) **zur Verbesserung der Alterungsbeständigkeit in** Heißluft nach 21 Tagen bei 150 °C und in Kühlmittel nach 21 Tagen bei 150 °C von Vulkanisaten in Kontakt mit Kühlmitteln, hergestellt durch Vulkanisation der vulkanisierbaren Zusammensetzung.

Die prinzipielle Herstellung derartiger Dichtungen und Schläuche ist dem Fachmann bekannt. Für die Herstellung von Riemen kann der Fachmann unter Einsatz der erfindungsgemäßen vulkanisierbaren Zusammensetzungen beispielsweise analog zur Offenbarung der US-A-4,715,607 verfahren.

**Gegenstand der Erfindung** sind ferner **Kühlaggregate** die i) mindestens ein Vulkanisat, hergestellt aus einer vulkanisierbaren Mischung enthaltend die zuvor genannten Komponente (a), (b) und (c) und ii) Kühlmittel aufweisen. Beispiele für solche Kühlaggregate sind Kühlvorrichtungen für Kraftfahrzeuge.

Gegenstand der Erfindung sind somit ferner **vulkanisierbare Zusammensetzungen** enthaltend
(a) 100 Gew.-Teile hydrierten Nitrilkautschuk,
(b) 50 bis 85 Gew.-Telle eines Epoxysilan-, Methacrylsilan- oder Vinylsilan-beschichteten Wollastonits oder Mischungen davon,
(c) 2 bis 10 Gew.-Teile mindestens einer Peroxidverbindung,
wobei der Gehalt an Zinkionen weniger als 1,5 Gew.-Teile bezogen auf 100°Gew.-Teile der Kautschuke (a) beträgt.

### Beispiele:

### Herstellung, Vulkanisation und Charakterisierung der Zusammensetzungen

Bei den nachfolgenden Beispielen 7* und 8* handelt es sich um nicht erfindungsgemäße Vergleichsbeispiele, bei den Beispielen 1 bis 6 und 9 um erfindungsgemäße Beispiele. Die Vergleichsbeispiele sind in den folgenden Tabellen mit einem * hinter der Beispielsnummer gekennzeichnet.

Als primäres Mischaggregat wurde ein Innenmischer vom Typ GK 1,5 E (Hersteller: HF Mixing Group) eingesetzt. Die Drehzahl betrug 40 min⁻¹, die Kühlwassereintrittstemperatur 40 °C.

Hierbei wurde der Kautschuk (a) vorgelegt 1 Minute mastiziert, danach alle weiteren Komponenten bis auf die Vulkanisationschemikalien (Peroxidverbindung und Coagens) hinzugefügt. 3 Minuten nach Mischungsbeginn wurde der Stempel gezogen und gefegt. Nach 250 Sekunden Mischzeit wurde die Mischung ausgeworfen.

Die Peroxidverbindung und das Coagens wurde in einem zweiten Schritt bei 30 °C auf der Walze eingemischt. (Hersteller Tröster, Walzendurchmesser 20 cm). Die Friktion betrug 1 : 1,11.

Die Drehzahl der Walze wurde dabei so gesteuert, dass stabile Felle erhalten wurden. Nachfolgend wurde in Plattenpressen eine Vulkanisation dieser Felle bei 180 °C für 15 min vorgenommen.

**Eingesetzte Komponenten:**

| | |
|---|---|
| **Therban® 3907** | hydrierter Nitrilkautschuk, ACN-Gehalt: 39 Gew.-%, Mooney Viskosität ML 1+4 @100°C: 70 ME, Restdoppelbindungsgehalt: max. 0,9 %. Dieser Kautschuk ist kommerziell erhältlich von der ARLANXEO Deutschland GmbH |
| **Therban® 3407** | hydrierter Nitrilkautschuk, ACN-Gehalt: 34 Gew.-%, Mooney Viskosität ML 1+4 @100°C: 70 ME, Restdoppelbindungsgehalt: max. 0,9 %. erhältlich bei ARLANXEO Deutschland GmbH |
| **Tremin® 283-600 EST** | Epoxysilan-beschichteter Wollastonit, erhältlich bei Quarzwerke |
| **Tremin® 283-600 MST** | Methacrylsilan-beschichteter Wollastonit, erhältlich bei Quarzwerke |
| **Tremin® 283-600 VST** | Vinylsilan-beschichteter Wollastonit, erhältlich bei Quarzwerke |
| **N550** | Corax® N 550 Ruß; erhältlich bei Orion Engineered Carbon |
| **N774** | Corax® N 774 Ruß; erhältlich bei Orion Engineered Carbon |
| **N990** | Luvomaxx MT N-990 Ruß, erhältlich von Lehmann und Voss |
| **Luvomaxx® CDPA** | 4,4'-Bis-(1,1-dimethylbenzyl)-diphenylamin, erhältlich von Lehmann und Voss |
| **Vulkanox® MB2** | 4- und 5-Methyl-2-mercapto-benzimidazol; erhältlich von der Lanxess Deutschland GmbH |
| **Vulkanox® ZMB2/C5** | Zinksalz von 4- und 5-Methyl-2-mercaptobenzthiazol; erhältlich von LANXESS Deutschland GmbH |
| **Maglite® DE** | Magnesiumoxid, erhältlich von CP Hall. |
| **Zinkoxid activ** | Zinkoxid (ZnO), kommerziell erhältlich von LANXESS Deutschland GmbH |
| **TAIC 70%** | KETTLITZ-TAIC 70; Coagens; erhältlich von Kettlitz-Chemie GmbH & Co. KG |
| **TOTM** | Uniplex® 546; erhältlich von Rheinchemie Rheinau GmbH |
| **Rhenofit TRIM/S** | 70 % Trimethylolpropantrimethacrylat auf 30 % Silica; Coagens; erhältlich von der Rhein Chemie Rheinau GmbH |
| **Perkadox® 14-40** | Di(tert.-butylperoxyisopropyl)benzol 40% geträgert auf Kieselsäure; erhältlich von Akzo Nobel Polymer Chemicals BV |
| **G13/Wasser-Gemisch** | G13 Kühlmittelzusatz erhältlich von Volkswagen; für die Lagerungsversuche wurden 50 Vol.-Teile deionisiertes Wasser und 50 Vol.-Teile G13 Kühlmittelzusatz gemischt |
| **2-Ethylhexansäure** | erhältlich von Sigma Aldrich |
| **Ethylenglykol** | erhältlich von Sigma Aldrich |

Die Mengenangebe der Gewichtsteile in den Beispielen bezieht sich auf 100 Gewichtsteile des Kautschuks (a).
Der Vulkanisationsverlauf im MDR (Moving Die Rheometer) und dessen analytischen Daten wurden an einem Monsanto-Rheometer MDR 2000 nach ASTM D5289-95 gemessen.

Die Zugversuche zur Bestimmung der Spannung in Abhängigkeit von der Deformation wurden nach DIN 53504 bzw. ASTM D412-80 durchgeführt.

Die Härte nach Shore A wurde nach ASTM-D2240-81 gemessen.

Die Heißluftalterung erfolgte nach DIN 53508 / 2000. Es wurde das Verfahren 4.1.1 "Lagerung im Wärmeschrank mit zwangsläufiger Durchlüftung" angewandt.

Die Lagerungen im G13/Wasser-Gemisch erfolgten in Druckbehältern mit einem Verhältnis Flüssigkeit zu Probenkörper von 150:1.

**Tabelle 1: Zusammensetzung der vulkanisierbaren Zusammensetzungen.**

| **Beispiele** | **1** | **2** | **3** | **4** | **5** | **6** | **7*** | **8*** | **9** |
|---|---|---|---|---|---|---|---|---|---|
| | **[Gewichtsteile]** | | | | | | | | |
| **Therban® 3907** | 100 | 100 | 100 | 100 | 100 | 100 | 100 | | |
| **Therban® 3407** | | | | | | | | 100 | 100 |
| **Tremin® 283-600 EST** | 65 | | | 65 | 65 | 65 | | | 65 |
| **Tremin® 283-600 MST** | | 65 | | | | | | | |
| **Tremin® 283-600 VST** | | | 65 | | | | | | |
| **N550** | | | | | | | | 50 | |
| **N774** | 14 | 14 | 14 | 15 | 15 | 15 | 15 | | 15 |
| **N990** | | | | | | | 65 | | |
| **Luvomaxx® CDPA** | 1,5 | 1,5 | 1,5 | 1,5 | 1,5 | 1,5 | 1,5 | 1,1 | 1,5 |
| **Vulkanox® MB2** | 0,3 | 0,3 | 0,3 | | | 0,3 | 0,3 | 0,3 | 0,3 |
| **Vulkanox® ZMB2** | | | | 0,4 | 0,4 | | | | |
| **Maglite® DE** | 3 | 3 | 3 | 3 | 3 | 3 | 3 | | |
| **Zinkoxide active** | | | | 3 | | | | | |
| **TAIC 70%** | | | | | | | | 1,5 | |
| **TOTM** | | | | | | | | | 5 |
| **Rhenofit® TRIM/S** | 1,5 | 1,5 | 1,5 | 1,5 | 1,5 | 1,5 | 1,5 | | 3 |
| **Perkadox® 14-40** | 8 | 8 | 8 | 7,5 | 7,5 | 7,5 | 7,5 | 8 | 7,5 |

Die vulkanisierbare Zusammensetzung des Beispiels 7* dient als Vergleichsversuch zu den Beispielen 1 bis 6, da es kein Silan-beschichtetes Wollastonit (Tremin®) enthält. Die Menge von 65 Gew.-Teilen Wollastonit bezogen auf 100 Gew.-Teile HNBR in den Beispielen 1 bis 6 wurde im Beispiel 7* durch den Füllstoff N990 ausgeglichen.

Die vulkanisierbare Zusammensetzung des Beispiels 8* dient als Vergleichsversuch zu dem Beispiel 9, da es kein Silan-beschichtetes Wollastonit (Tremin®) enthält. Die Menge von 65 Gew.-Teilen Wollastonit im Beispiel 9 wurde im Beispiel 8* durch 50 Gew.-Teile des Füllstoffs N550 ausgeglichen um ähnliche Zugfestigkeitswerte zu erreichen. Man benötigt signifikant weniger N550 als Tremin® um ähnliche Härte und Zugfestigkeit zu erhalten.

Die Vulkanisationsmessung erfolgte in einem Monsanto-Rheometer MDR 2000 bei einer Prüftemperatur von 180 °C über eine Prüfzeit von 15 min.

**Tabelle 2: Vulkanisationsverhalten der vulkanisierbaren Zusammensetzungen**

| **MDR 180°C** | | **1** | **2** | **3** | **4** | **5** | **6** | **7*** | **8*** | **9** |
|---|---|---|---|---|---|---|---|---|---|---|
| S' min | dNm | 1,37 | 1,36 | 1,38 | 1,43 | 1,47 | 1,46 | 1,85 | 2,21 | 1,38 |
| S' max | dNm | 24,73 | 24,77 | 25,34 | 23,75 | 23,35 | 22,76 | 27,57 | 30,04 | 20,49 |
| Delta S' | dNm | 23,36 | 23,41 | 23,96 | 22,32 | 21,88 | 21,3 | 25,72 | 27,83 | 19,11 |
| TS 1 | s | 31 | 31 | 31 | 33 | 33,6 | 33,6 | 29,4 | 28 | 37 |
| TS 2 | s | 37 | 37 | 37 | 39,6 | 40,2 | 40,8 | 36 | 34 | 46 |
| t 50 | s | 94 | 94 | 94 | 98,49 | 95,8 | 97,03 | 95,7 | 113 | 107 |
| t 90 | s | 268 | 266 | 267 | 294 | 271 | 271 | 270,54 | 324 | 298 |
| t 95 | s | 346 | 342 | 344 | 387 | 350 | 348 | 349,92 | 418 | 387 |

| | | | | | | | | | | |
|---|---|---|---|---|---|---|---|---|---|---|
| S' min ist das minimale Drehmoment der Vernetzungsisotherme S' max ist das maximale Drehmoment der Vernetzungsisotherme Delta S' Differenz von S'max und S'min t₅₀: Zeitpunkt, bei dem 50% des Endumsatzes erreicht sind t₉₀: Zeitpunkt, bei dem 90% des Endumsatzes erreicht sind t₉₅: Zeitpunkt, bei dem 95% des Endumsatzes erreicht sind | | | | | | | | | | |

Die Versuchsserie zeigt, dass die erfindungsgemäß hergestellten Zusammensetzungen (1 bis 6) ein mit dem Vergleichsbeispiel (7*) vergleichbares Vulkanisationsverhalten aufweisen. Ebenso weist die erfindungsgemäße Kautschukmischung (9) ein mit dem Vergleichsbeispiel (8*) vergleichbares Vulkanisationsverhalten auf.

Die vulkanisierbaren Zusammensetzungen wurden anschließend in einer Plattenpresse unter einem Druck von 170 bar bei 180 °C 10 min vulkanisiert.

An den für 4 Stunden bei 160 °C getemperten Vulkanisaten wurden bei 23 °C die in Tabelle 3 angegebenen Prüfwerte bestimmt.

**Tabelle 3: Eigenschaften der vulkanisierten Zusammensetzungen 1 bis 9 nach Vulkanisation (10 Minuten) bei 180 °C (Prüftemperatur: 23 °C)**

| **Zug prüfung** | | **1** | **2** | **3** | **4** | **5** | **6** | **7*** | **8*** | **9** |
|---|---|---|---|---|---|---|---|---|---|---|
| **2 mm Platten bei 180 °C für 10 min vulkanisiert** | | | | | | | | | | |
| **M 10** | MPa | 0,8 | 0,9 | 0,8 | 0,8 | 0,8 | 0,8 | 0,8 | 0,7 | 0,7 |
| **M 25** | MPa | 1,5 | 1,7 | 1,4 | 1,4 | 1,3 | 1,4 | 1,4 | 1,3 | 1,2 |
| **M 50** | MPa | 2,4 | 3,3 | 2,6 | 2,1 | 2 | 2 | 2,2 | 2,2 | 1,8 |
| **M 100** | MPa | 4,3 | 8,1 | 7,1 | 3,5 | 3,3 | 3,3 | 5,1 | 6,2 | 2,6 |
| **M 300** | MPa | 10,9 | 17,5 | 19,8 | 9 | 8,9 | 8,7 | 17,6 | -- | 7,8 |
| **EB** | % | 441 | 310 | 300 | 466 | 458 | 467 | 363 | 249 | 468 |
| **TS** | MPa | 27 | 18 | 20 | 24 | 24 | 24 | 18 | 25,5 | 24,3 |
| **H** | ShA | 68 | 69 | 69 | 66 | 66 | 65 | 70 | 71 | 61,8 |

Das ungealterte Vergleichsvulkanisat 7* weist eine geringere Bruchdehnung und Zugfestigkeit auf als die erfindungsgemäßen Vulkanisate 4 bis 6.
Das ungealterte Vergleichsvulkanisat 8* weist eine wesentlich geringere Bruchdehnung bei gleicher Zugfestigkeit auf als die erfindungsgemäßen Vulkanisate 9.
Die beiden Vergleichsvulkanisate weisen eine Härte (H) von 70 oder mehr auf, während die erfindungsgemäßen Vulkanisate 1 bis 6 und 9 eine Härte von weniger als 70 aufweisen.

**Tabelle 4: Eigenschaften der vulkanisierten Zusammensetzungen 1 bis 7 nach Heißluftalterung bei 150 °C / 504 h (Prüftemperatur: 23 °C)**

| **Zugprüfung** | | **1** | **2** | **3** | **4** | **5** | **6** | **7*** |
|---|---|---|---|---|---|---|---|---|
| **Alterung der Vulkanisate in Heißluft, 504 h bei 150 °C** | | | | | | | | |
| **M 10** | MPa | 1,2 | 1,2 | 1,1 | 1,2 | 1,2 | 1,2 | 1,3 |
| **M 25** | MPa | 2,4 | 2,6 | 2,3 | 2,5 | 2,5 | 2,5 | 2,5 |
| **M 50** | MPa | 4,9 | 5,5 | 5 | 5 | 5 | 5 | 4,8 |
| **M 100** | MPa | 8,6 | 10,9 | 10,9 | 9,2 | 9 | 9 | 10,4 |
| **M 300** | MPa | 14,1 | 16,4 | -- | 14,1 | 13,7 | 13,6 | - |
| **EB** | % | 375 | 233 | 254 | 383 | 396 | 429 | 228 |
| **TS** | MPa | 18 | 15,4 | 17,1 | 17,5 | 17,4 | 19,4 | 18,5 |
| **H** | ShA | 76 | 76 | 76 | 76 | 76 | 76 | 80 |

**Tabelle 5: Änderung der Eigenschaften der vulkanisierten Zusammensetzungen 1 bis 7 nach Heißluftalterung bei 150 °C / 504 h (Prüftemperatur: 23 °C)**

| **Änderung** | | **1** | **2** | **3** | **4** | **5** | **6** | **7*** |
|---|---|---|---|---|---|---|---|---|
| **Alterung der Vulkanisate in Heißluft, 504 h bei 150 °C** | | | | | | | | |
| **Δ** EB | % | -15 | -25 | -15 | -18 | -14 | -8 | -37 |
| **Δ** TS | % | -33 | -13 | -14 | -28 | -28 | -18 | 2 |
| **Δ** H | ShA | 8 | 8 | 7 | 10 | 11 | 11 | 10 |

Die Bruchdehnung (EB) stellt beim Vergleichsversuch 7 ohne Silan-beschichtetes Wollastonit mit -37 % Änderung nach Alterung in Heißluft für 504 Stunden einen ungenügenden Wert dar. Im Gegensatz dazu weisen die Vulkanisate mit Silan-beschichtetem Wollastonit der Beispiele 1 bis 6 deutlich niedrigeren und somit besseren Abfall der Bruchdehnung auf. Die Härte (H) der erfindungsgemäßen Beispiele ist vergleichbar mit dem Vergleichsbeispiel 7.
Beispiel 6 mit EST-beschichtetem Wollastonit und ohne Zink weist mit -8 % Änderung der Bruchdehnung den geringsten Wert auf und liefert somit die beste Heißluftalterung.

**Tabelle 6: Eigenschaften der vulkanisierten Zusammensetzungen 8 und 9 und deren Änderung nach Alterung in Ethylenglykol/Wasser/2-Ethylhexansäure bei 120 °C / 504 h (Prüftemperatur: 23 °C)**

| **Zug prüfung** | | **8*** | 9 |
|---|---|---|---|
| **Alterung der Vulkanisate in Ethylenglykol/Wasser/2-Ethylhexansäure, 504 h bei 120 °C** | | | |
| **M 10** | MPa | 0,5 | 0,4 |
| **M 25** | MPa | 1 | 0,7 |
| **M 50** | MPa | 2,1 | 0,9 |
| **M 100** | MPa | 7,4 | 1,3 |
| **M 300** | MPa | - | 6 |
| **EB** | % | 190 | 466 |
| **ΔEB** | % | -24 | 0 |
| **TS** | MPa | 18,8 | 19 |
| **ΔTS** | % | -26 | -22 |
| **H** | ShA | 57 | 47 |
| **ΔH** | ShA | | -15 |
| **ΔV** | % | 47,1 | 19,1 |

Das erfindungsgemäße Beispiel 9 mit Silan-beschichtetem Wollastonit weist im Vergleich zum Vergleichsbeispiel 8* ohne Silan-beschichtetem Wollastonit eine deutliche verbesserte Bruchdehnung nach Alterung für 504 Stunden in einer Ethylenglykol/Wasser/2-Ethylhexansäure-Mischung auf.
Zusätzlich weist das erfindungsgemäße Beispiel 9 eine verbesserte Quellung (ΔV) auf.

**Tabelle 7: Vergleich der Beschichtungen - Eigenschaften der vulkanisierten Zusammensetzungen 1 bis 3 nach Alterung bei 150 °C / 1008 h in G13/Wasser-Gemisch (Prüftemperatur: 23 °C)**

| **Zugprüfung** | | **1** | **2** | **3** |
|---|---|---|---|---|
| **Alterung der Vulkanisate in G13, 1008 h bei 150 °C** | | | | |
| **M 10** | MPa | 0,8 | 1 | 1 |
| **M 25** | MPa | 1,4 | 1,7 | 1,8 |
| **M 50** | MPa | 1,8 | 2,6 | 2,9 |
| **M 100** | MPa | 2,6 | 4,5 | 5,5 |
| **M 300** | MPa | 6,9 | 8,4 | 11,3 |
| **EB** | % | 414 | 467 | 381 |
| **TS** | MPa | 12,1 | 13,6 | 13,2 |
| **H** | ShA | 71 | 70 | 72 |

**Tabelle 8: Vergleich der Beschichtungen - Änderung der Eigenschaften der vulkanisierten Zusammensetzungen 1 bis 3 nach Alterung bei 150 °C / 1008 h in G13/Wasser-Gemisch (Prüftemperatur: 23 °C)**

| **Änderung** | | **1** | **2** | **3** |
|---|---|---|---|---|
| **Alterung der Vulkanisate in G13, 1008 h bei 150 °C** | | | | |
| **Δ** EB | % | -6 | 51 | 27 |
| **Δ** TS | % | -55 | -23 | -33 |
| **Δ** H | ShA | 3 | 2 | 3 |
| **Δ** V | % | 19 | 20 | 10 |

Vulkanisate mit VST-beschichtetem Wollastonit weisen nach Alterung für 1008 Stunden in G13 die beste Balance zwischen Änderung der Bruchdehnung, Volumenquellung und Änderung der Zugfestigkeit auf und sind somit besser als Vulkanisate mit Epoxysilan-beschichtetem Wollastonit oder Methacylsilanbeschichtetem Wollastonit.

**Tabelle 9: Eigenschaften der vulkanisierten Zusammensetzungen 4 bis 7 nach Alterung bei 150 °C / 504 h in G13/Wasser-Gemisch (Prüftemperatur: 23 °C)**

| **Zugprüfung** | | **4** | **5** | **6** | **7*** |
|---|---|---|---|---|---|
| **Alterung der Vulkanisate in G13, 504 h bei 150 °C** | | | | | |
| **M 10** | MPa | 1,1 | 0,9 | 0,9 | 0,9 |
| **M 25** | MPa | 1,9 | 1,6 | 1,6 | 1,5 |
| **M 50** | MPa | 3 | 2,5 | 2,4 | 2,3 |
| **M 100** | MPa | 5,2 | 4,1 | 3,9 | 4,8 |
| **M 300** | MPa | 11 | 9,2 | 8,7 | 16 |
| **EB** | % | 466 | 475 | 485 | 432 |
| **TS** | MPa | 25,4 | 23,6 | 24,5 | 17,4 |
| **H** | ShA | 72 | 69 | 68 | 72 |

**Tabelle 10: Änderung der Eigenschaften der vulkanisierten Zusammensetzungen 4 bis 7* nach Alterung bei 150 °C / 504 h in G13/Wasser-Gemisch (Prüftemperatur: 23 °C)**

| **Änderung** | | **4** | **5** | **6** | **7*** |
|---|---|---|---|---|---|
| **Alterung der Vulkanisate in G13, 504 h bei 150 °C** | | | | | |
| **Δ EB** | % | 0 | 4 | 4 | 19 |
| **Δ TS** | % | 5 | -2 | 4 | -4 |
| **Δ H** | ShA | 6 | 3 | 3 | 2 |
| **Δ V** | % | 3 | 3 | 3 | 1 |

Das Vergleichsbeispiel 7* weist mit einer Änderung der Bruchdehnung von 19 % nach Alterung für 504 Stunden in G13 den höchsten und somit schlechtesten Wert auf. Die erfindungsgemäßen Beispiele 4 bis 6 weisen eine deutlich geringere Änderung der Bruchdehnung auf.

## Patentansprüche

1. Verwendung einer **vulkanisierbaren Zusammensetzung** zur Herstellung eines Vulkanisats, das mit Kühlmittel in Kontakt steht, **dadurch gekennzeichnet, dass** die vulkanisierbare Zusammensetzung
(a) mindestens einen Kautschuk, bevorzugt mindestens einen hydrierten Nitrilkautschuk oder EPDM, besonders bevorzugt hydrierten Nitrilkautschuk,
(b) mindestens einen Silan-beschichteten Wollastonit, bevorzugt mindestens einen Vinylsilan-beschichteten Wollastonit, und
(c) mindestens eine Peroxidverbindung
enthält.

2. Verwendung einer vulkanisierbaren Zusammensetzung zur Herstellung eines Vulkanisats, das mit Kühlmittel in Kontakt steht nach Anspruch 1, **dadurch gekennzeichnet, dass** der mindestens eine Kautschuk (a) mindestens ein hydrierter Nitrilkautschuk ist, bei dem es sich um ein **ganz- oder teilweise hydrierts** Co- oder Terpolymer auf der Basis mindestens eines konjugierten **Diens** und mindestens eines **α,β-ungesättigten Nitrilmonomeren** sowie gegebenenfalls weiterer copolymerisierbarer Monomere handelt.

3. Verwendung einer vulkanisierbaren Zusammensetzung zur Herstellung eines Vulkanisats, das mit Kühlmittel in Kontakt steht nach Anspruche 1 oder 2, **dadurch gekennzeichnet, dass** der mindestens eine **Kautschuk (a)** mindestens ein hydrierter Nitrilkautschuk ist, bei dem die **Mooney-Viskosität** (ML 1+4 @ 100 °C) im Bereich von 10 bis 120 ME, bevorzugt im Bereich von 15 bis 100 ME liegt, wobei die Bestimmung der Mooney-Viskosität gemäß ASTM Norm D1646 erfolgt.

4. Verwendung einer vulkanisierbaren Zusammensetzung zur Herstellung eines Vulkanisats, das mit Kühlmittel in Kontakt steht nach einem der Ansprüche 1 bis 3, **dadurch gekennzeichnet, dass** die Menge des mindestens einen Silanbeschichteten Wollastonits **(b)** 35 bis 150 Gew.-Teile, bevorzugt 50 bis 100 Gew.-Teile bezogen auf 100 Gew.-Teile der Kautschuke (a) beträgt.

5. Verwendung einer vulkanisierbaren Zusammensetzung zur Herstellung eines Vulkanisats, das mit Kühlmittel in Kontakt steht nach einem der Ansprüche 1 bis 4, **dadurch gekennzeichnet, dass** die mindestens eine **Peroxidverbindung (c)** ein organisches Peroxid, bevorzugt Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-di-hydroperoxid, Dibenzoylperoxid, Bis-(2,4-dichlorobenzoyl)peroxid, t-Butylperbenzoat, 4,4-Di(t-butylperoxy)valeriansäurebutylester oder 1,1-Bis(t-butylperoxy)-3,3,5-trimethylcyclohexan ist.

6. Verwendung einer vulkanisierbaren Zusammensetzung zur Herstellung eines Vulkanisats, das mit Kühlmittel in Kontakt steht nach einem der Ansprüche 1 bis 5, **dadurch gekennzeichnet, dass** als weitere **Komponente (d)** mindestens ein **Füllstoff** eingesetzt wird, bei dem es sich um einen Ruß oder mineralischen Füllstoff, bevorzugt einen basischen mineralischen Füllstoff handelt.

7. Verwendung einer vulkanisierbaren Zusammensetzung zur Herstellung eines Vulkanisats, das mit Kühlmittel in Kontakt steht nach einem der Ansprüche 1 bis 6, **dadurch gekennzeichnet, dass** als **Komponente (d)** mindestens ein **Alterungsschutzmittel** eingesetzt wird, welches ausgewählt ist aus der Gruppe bestehend aus Diphenylamin, Mercaptobenzimidazol, subsitutierte Phenole und Mischungen davon.

8. Verwendung einer vulkanisierbaren Zusammensetzung zur Herstellung eines Vulkanisats, das mit Kühlmittel in Kontakt steht nach einem der Ansprüche 1 bis 7, **dadurch gekennzeichnet, dass** die Zusammensetzung
(a) 100 Gew.-Teile mindestens eines Kautschuks, bevorzugt mindestens eines hydrierten Nitrilkautschuks oder EPDM, besonders bevorzugt hydrierten Nitrilkautschuk,
(b) 35 bis 150 Gew.-Teile, bevorzugt 50 bis 100 Gew.-Teile mindestens eines Silan-beschichtetes Wollastonits, bevorzugt mindestens eines Vinylsilan-beschichtetes Wollastonits,
(c) 1 bis 20 Gew.-Teile, bevorzugt 2 bis 10 Gew.-Teile mindestens einer Peroxidverbindung,
(d) 0 bis 100 Gew.-Teile, bevorzugt 1 bis 80 Gew.-Teile eines oder mehrerer üblicher Kautschukadditive, bevorzugt ein oder mehrerer Füllstoffe, insbesondere Ruß, Kieselsäure, Magnesiumoxid oder Aluminiumoxid, eines oder mehrerer Füllstoffaktivatoren, insbesondere auf Basis eines organischen Silans, eines oder mehrerer Alterungsschutzmittel, insbesondere oligomerisiertes 2,2,4-Trimethyl-1,2-dihydro-chinolin (TMQ), styrolisiertes Diphenylamin (DDA), octyliertes Diphenylamin (OCD), cumyliertes Diphenylamin (CDPA) oder Zinksalz von 4- und 5-Methylmercaptobenzimidazol (Vulkanox ZMB2) oder 4- und 5-Methylmercaptobenzimidazo und/oder eines oder mehrerer Formtrennmittel oder Verarbeitungshilfsmittel bezogen auf 100 Gew.-Teile der Kautschuke (a), enthält.

9. **Verwendung** einer vulkanisierbaren Zusammensetzung zur Herstellung eines Vulkanisats, das mit Kühlmittel in Kontakt steht nach einem der Ansprüche 1 bis 8, **dadurch gekennzeichnet, dass** die vulkanisierbare Zusammensetzung
(a) 100 Gew.-Teile mindestens eines Kautschuks, bevorzugt hydrierten Nitrilkautschuks,
(b) 35 bis 150 Gew.-Teile, bevorzugt 50 bis 100 Gew.-Teile mindestens eines Silan-beschichteten Wollastonites, bevorzugt Epoxysilan-, Methacrylsilan- oder Vinylsilan-beschichteten Wollastonits oder Mischungen davon,
(c) 1 bis 20 Gew.-Teile, bevorzugt 2 bis 10 Gew.-Teile mindestens einer Peroxidverbindung,
(d) 0 bis 100 Gew.-Teile, bevorzugt 1 bis 80 Gew.-Teile eines oder mehrerer üblicher Kautschukadditive, bevorzugt eines oder mehrerer Füllstoffe, insbesondere Ruß, Kieselsäure, Magnesiumoxid oder Aluminiumoxid, eines oder mehrerer Füllstoffaktivatoren, insbesondere auf Basis eines organischen Silans, eines oder mehrerer Alterungsschutzmittel, insbesondere oligomerisiertes 2,2,4-Trimethyl-1,2-dihydro-chinolin (TMQ), styrolisiertes Diphenylamin (DDA), octyliertes Diphenylamin (OCD), cumyliertes Diphenylamin (CDPA) oder Zinksalz von 4- und 5-Methylmercaptobenzimidazol (Vulkanox ZMB2) oder 4- und 5-Methylmercaptobenzimidazol und/oder eines oder mehrerer Formtrennmittel oder Verarbeitungshilfsmittel bezogen auf 100 Gew.-Teile der Kautschuke (a) enthält,
wobei der Gehalt an Zinkionen weniger als 1,5 Gew.-Teile bezogen auf 100 Gew.-Teile der Kautschuke (a) beträgt und die vulkanisierbare Zusammensetzung bevorzugt frei von Zinkionen ist.

10. Verwendung eines **Vulkanisats,** hergestellt aus einer vulkanisierbaren Zusammensetzung wie in den Ansprüchen 1 bis 9 definiert zur Herstellung eines Bauteils, von dem zumindest das Vulkanisat mit **Kühlmittel** in Kontakt steht.

11. Verwendung nach Anspruch 10, **dadurch gekennzeichnet, dass** das **Bauteil** ein Schlauch, ein Heizungsschlauch, ein Kühlschlauch, eine Dichtung oder eine Kühldichtung ist.

12. Verwendung nach einem der Ansprüche 1 bis 11, wobei das **Kühlmittel** Wasser, einen Gefrierpunktserniedriger, bevorzugt Alkylglycol oder Salze, besonders bevorzugt Ethylenglycol oder Propylenglycol, und einen Korrosionsinhibitor, bevorzugt neutralisierte organische Säuren, besonders bevorzugt Natriumethylhexanoat enthält.

13. **Vulkanisierbare Zusammensetzung** enthaltend
(a) 100 Gew.-Teile hydrierten Nitrilkautschuk,
(b) 50 bis 85 Gew.-Teile eines Epoxysilan-, Methacrylsilan- oder Vinylsilan-beschichteten Wollastonits oder Mischungen davon,
(c) 2 bis 10 Gew.-Teile mindestens einer Peroxidverbindung,
wobei der Gehalt an Zinkionen weniger als 1,5 Gew.-Teile bezogen auf 100 Gew.-Teile der Kautschuke (a) beträgt.

14. **Bauteil** umfassend ein Vulkanisat das in Kontakt mit einem Kühlmittel steht, hergestellt aus einer vulkanisierbaren Zusammensetzung, **dadurch gekennzeichnet, dass** die vulkanisierbare Zusammensetzung
(a) mindestens einen hydrierten Nitrilkautschuk oder EPDM,
(b) mindestens einen Silan-beschichteten Wollastonit, bevorzugt mindestens einen Vinylsilan-beschichteten Wollastonit, und
(c) mindestens eine Peroxidverbindung enthält.

15. **Kühlaggregat** umfassend
(i) mindestens ein Bauteil gemäß Anspruch 14 und
(ii) Kühlmittel,
wobei das mindestens eine Vulkanisat in Kontakt mit dem Kühlmittel ii) steht.

16. Verwendung von 35 bis 150 Gew.-Teile Silan-beschichtetem Wollastonit, bevorzugt Vinylsilan-beschichtetem Wollastonit, bezogen auf 100 Gew.-Teile des mindestens einen Kautschuks (a) in einer vulkanisierbaren Zusammensetzung enthaltend mindestens einen Kautschuk (a) und mindestens eine Peroxidverbindung (c) zur Verbesserung der Alterungsbeständigkeit in Heißluft nach 21 Tagen bei 150 °C und in Kühlmittel nach 21 Tagen bei 150 °C von Vulkanisaten in Kontakt mit Kühlmitteln, hergestellt durch Vulkanisation der vulkanisierbaren Zusammensetzung.

## Claims

1. Use of a vulcanizable composition for producing a vulcanizate in contact with coolant, **characterized in that** the vulcanizable composition comprises
(a) at least one rubber, preferably at least one hydrogenated nitrile rubber or EPDM, more preferably hydrogenated nitrile rubber,
(b) at least one silane-coated wollastonite, preferably at least one vinylsilane-coated wollastonite, and
(c) at least one peroxide compound.

2. Use of a vulcanizable composition for producing a vulcanizate in contact with coolant according to Claim 1, **characterized in that** the at least one rubber (a) is at least one hydrogenated nitrile rubber which is a fully or partly hydrogenated co- or terpolymer based on at least one conjugated diene and at least one α,β-unsaturated nitrile monomer and optionally further copolymerizable monomers.

3. Use of a vulcanizable composition for producing a vulcanizate in contact with coolant according to Claim 1 or 2, **characterized in that** the at least one rubber (a) is at least one hydrogenated nitrile rubber where the Mooney viscosity (ML 1+4 @ 100°C) is in the range from 10 to 120 MU, preferably in the range from 15 to 100 MU, where the Mooney viscosity is determined according to ASTM Standard D1646.

4. Use of a vulcanizable composition for producing a vulcanizate in contact with coolant according to any of Claims 1 to 3, **characterized in that** the amount of the at least one silane-coated wollastonite (b) is 35 to 150 parts by weight, preferably 50 to 100 parts by weight, based on 100 parts by weight of the rubbers (a).

5. Use of a vulcanizable composition for producing a vulcanizate in contact with coolant according to any of Claims 1 to 4, **characterized in that** the at least one peroxide compound (c) is an organic peroxide, preferably dicumyl peroxide, t-butyl cumyl peroxide, bis(t-butylperoxyisopropyl)benzene, di-t-butyl peroxide, 2,5-dimethylhexane 2,5-dihydroperoxide, 2,5-dimethylhex-3-yne 2,5-dihydroperoxide, dibenzoyl peroxide, bis(2,4-dichlorobenzoyl) peroxide, t-butyl perbenzoate, butyl 4,4-di(t-butylperoxy)valerate or 1,1-bis(t-butylperoxy)-3,3,5-trimethylcyclohexane.

6. Use of a vulcanizable composition for producing a vulcanizate in contact with coolant according to any of Claims 1 to 5, **characterized in that** a further component (d) used is at least one filler which is a carbon black or a mineral filler, preferably a basic mineral filler.

7. Use of a vulcanizable composition for producing a vulcanizate in contact with coolant according to any of Claims 1 to 6, **characterized in that** a component (d) used is at least one ageing stabilizer selected from the group consisting of diphenylamine, mercaptobenzimidazole, substituted phenols and mixtures thereof.

8. Use of a vulcanizable composition for producing a vulcanizate in contact with coolant according to any of Claims 1 to 7, **characterized in that** the composition comprises
(a) 100 parts by weight of at least one rubber, preferably at least one hydrogenated nitrile rubber or EPDM, more preferably hydrogenated nitrile rubber,
(b) 35 to 150 parts by weight, preferably 50 to 100 parts by weight, of at least one silane-coated wollastonite, preferably at least one vinylsilane-coated wollastonite,
(c) 1 to 20 parts by weight, preferably 2 to 10 parts by weight, of at least one peroxide compound,
(d) 0 to 100 parts by weight, preferably 1 to 80 parts by weight, of one or more customary rubber additives, preferably one or more fillers, especially carbon black, silica, magnesium oxide or aluminium oxide, one or more filler-activators, especially based on an organic silane, one or more ageing stabilizers, especially oligomerized 2,2,4-trimethyl-1,2-dihydroquinoline (TMQ), styrenized diphenylamine (DDA), octylated diphenylamine (OCD), cumylated diphenylamine (CDPA) or zinc salt of 4- and 5-methylmercaptobenzimidazole (Vulkanox ZMB2) or 4- and 5-methylmercaptobenzimidazole and/or one or more mould release agents or processing aids, based on 100 parts by weight of the rubbers (a).

9. Use of a vulcanizable composition for producing a vulcanizate in contact with coolant according to any of Claims 1 to 8, **characterized in that** the vulcanizable composition comprises
(a) 100 parts by weight of at least one rubber, preferably hydrogenated nitrile rubber,
(b) 35 to 150 parts by weight, preferably 50 to 100 parts by weight, of at least one silane-coated wollastonite, preferably epoxysilane-, methacryloylsilane- or vinylsilane-coated wollastonite or mixtures thereof,
(c) 1 to 20 parts by weight, preferably 2 to 10 parts by weight, of at least one peroxide compound,
(d) 0 to 100 parts by weight, preferably 1 to 80 parts by weight, of one or more customary rubber additives, preferably one or more fillers, especially carbon black, silica, magnesium oxide or aluminium oxide, one or more filler-activators, especially based on an organic silane, one or more ageing stabilizers, especially oligomerized 2,2,4-trimethyl-1,2-dihydroquinoline (TMQ), styrenized diphenylamine (DDA), octylated diphenylamine (OCD), cumylated diphenylamine (CDPA) or zinc salt of 4- and 5-methylmercaptobenzimidazole (Vulkanox ZMB2) or 4- and 5-methylmercaptobenzimidazole and/or one or more mould release agents or processing aids, based on 100 parts by weight of the rubbers (a),
where the content of zinc ions is less than 1.5 parts by weight based on 100 parts by weight of the rubbers (a) and the vulcanizable composition is preferably free of zinc ions.

10. Use of the vulcanizate produced from a vulcanizable composition as defined in Claims 1 to 9 for production of a component of which at least the vulcanizate is in contact with coolant.

11. Use according to Claim 10, **characterized in that** the component part is a hose, a heating hose, a cooling hose, a seal or a cooling seal.

12. Use according to any of Claims 1 to 11, wherein the coolant comprises water, a freezing point depressant, preferably alkylglycol or salts, more preferably ethylene glycol or propylene glycol, and a corrosion inhibitor, preferably neutralized organic acids, more preferably sodium ethylhexanoate.

13. Vulcanizable composition comprising
(a) 100 parts by weight of hydrogenated nitrile rubber,
(b) 50 to 85 parts by weight of an epoxysilane-, methacryloylsilane- or vinylsilane-coated wollastonite or mixtures thereof,
(c) 2 to 10 parts by weight of at least one peroxide compound,
where the content of zinc ions is less than 1.5 parts by weight based on 100 parts by weight of the rubbers (a).

14. Component part comprising a vulcanizate in contact with a coolant, produced from a vulcanizable composition, **characterized in that** the vulcanizable composition comprises
(a) at least one hydrogenated nitrile rubber or EPDM,
(b) at least one silane-coated wollastonite, preferably at least one vinylsilane-coated wollastonite, and
(c) at least one peroxide compound.

15. Cooling unit comprising
(i) at least one component according to Claim 14 and
(ii) coolant,
wherein the at least one vulcanizate is in contact with the coolant ii).

16. Use of 35 to 150 parts by weight of silane-coated wollastonite, preferably vinylsilane-coated wollastonite, based on 100 parts by weight of the at least one rubber (a) in a vulcanizable composition comprising at least one rubber (a) and at least one peroxide compound (c) for improving aging resistance in hot air after 21 days at 150°C and in coolant after 21 days at 150°C of vulcanizates in contact with coolants, produced by vulcanizing the vulcanizable composition.

## Revendications

1. Utilisation d'une composition vulcanisable pour la fabrication d'un vulcanisat, qui est en contact avec des agents réfrigérants, **caractérisée en ce que** la composition vulcanisable contient :
(a) au moins un caoutchouc, de préférence au moins un caoutchouc de nitrile hydrogéné ou l'EPDM, de manière particulièrement préférée un caoutchouc de nitrile hydrogéné,
(b) au moins une wollastonite revêtue de silane, de préférence au moins une wollastonite revêtue de vinylsilane, et
(c) au moins un composé de peroxyde.

2. Utilisation d'une composition vulcanisable pour la fabrication d'un vulcanisat qui est en contact avec des agents réfrigérants selon la revendication 1, **caractérisée en ce que** ledit au moins un caoutchouc (a) est au moins un caoutchouc de nitrile hydrogéné, qui consiste en un co- ou terpolymère entièrement ou partiellement hydrogéné à base d'au moins un diène conjugué et d'au moins un monomère de nitrile α,β-insaturé, ainsi qu'éventuellement d'autres monomères copolymérisables.

3. Utilisation d'une composition vulcanisable pour la fabrication d'un vulcanisat qui est en contact avec des agents réfrigérants selon la revendication 1 ou 2, **caractérisée en ce que** ledit au moins un caoutchouc (a) est au moins un caoutchouc de nitrile hydrogéné, dont la viscosité de Mooney (ML 1+4 @ 100 °C) se situe dans la plage allant de 10 à 120 ME, de préférence dans la plage allant de 15 à 100 ME, la détermination de la viscosité de Mooney ayant lieu selon la norme ASTM D1646.

4. Utilisation d'une composition vulcanisable pour la fabrication d'un vulcanisat qui est en contact avec des agents réfrigérants selon l'une quelconque des revendications 1 à 3, **caractérisée en ce que** la quantité de ladite au moins une wollastonite revêtue de silane (b) est de 35 à 150 parties en poids, de préférence de 50 à 100 parties en poids, par rapport à 100 parties en poids des caoutchoucs (a).

5. Utilisation d'une composition vulcanisable pour la fabrication d'un vulcanisat qui est en contact avec des agents réfrigérants selon l'une quelconque des revendications 1 à 4, **caractérisée en ce que** ledit au moins un composé de peroxyde **(c)** est un peroxyde organique, de préférence le peroxyde de dicumyle, le peroxyde de t-butylcumyle, le bis-(t-butyl-peroxy-isopropyl)benzène, le peroxyde de di-t-butyle, le 2,5-dihydroperoxyde de 2,5-diméthylhexane, le 3,2,5-di-hydroperoxyde de 2,5-diméthylhexyne, le peroxyde de dibenzoyle, le peroxyde de bis-(2,4-dichlorobenzoyle), le perbenzoate de t-butyle, l'ester butylique de l'acide 4,4-di(t-butylperoxy)valérique ou le 1,1-bis(t-butylperoxy)-3,3,5-triméthyl-cyclohexane.

6. Utilisation d'une composition vulcanisable pour la fabrication d'un vulcanisat qui est en contact avec des agents réfrigérants selon l'une quelconque des revendications 1 à 5, **caractérisée en ce qu'**au moins une charge est utilisée en tant que composant (d) supplémentaire, celle-ci consistant en un noir de carbone ou une charge minérale, de préférence une charge minérale basique.

7. Utilisation d'une composition vulcanisable pour la fabrication d'un vulcanisat qui est en contact avec des agents réfrigérants selon l'une quelconque des revendications 1 à 6, **caractérisée en ce qu'**au moins un agent antivieillissement est utilisé en tant que composant (d), qui est choisi dans le groupe constitué par la diphénylamine, le mercaptobenzimidazole, les phénols substitués et leurs mélanges.

8. Utilisation d'une composition vulcanisable pour la fabrication d'un vulcanisat qui est en contact avec des agents réfrigérants selon l'une quelconque des revendications 1 à 7, **caractérisée en ce que** la composition contient :
(a) 100 parties en poids d'au moins un caoutchouc, de préférence d'au moins un caoutchouc de nitrile hydrogéné ou l'EPDM, de manière particulièrement préférée un caoutchouc de nitrile hydrogéné,
(b) 35 à 150 parties en poids, de préférence 50 à 100 parties en poids, d'au moins une wollastonite revêtue de silane, de préférence au moins une wollastonite revêtue de vinylsilane,
(c) 1 à 20 parties en poids, de préférence 2 à 10 parties en poids, d'au moins un composé de peroxyde,
(d) 0 à 100 parties en poids, de préférence 1 à 80 parties en poids, d'un ou de plusieurs additifs usuels pour le caoutchouc, de préférence une ou plusieurs charges, notamment le noir de carbone, la silice, l'oxyde de magnésium ou l'oxyde d'aluminium, d'un ou de plusieurs activateurs de charge, notamment à base d'un silane organique, d'un ou de plusieurs agents antivieillissement, notamment la 2,2,4-triméthyl-1,2-dihydro-quinoline oligomérisée (TMQ), la diphénylamine styrénisée (DDA), la diphénylamine octylée (OCD), la diphénylamine cumylée (CDPA) ou un sel de zinc de 4- et 5-méthylmercaptobenzimidazole (Vulkanox ZMB2) ou de 4- et 5-méthylmercaptobenzimidazole et/ou d'un ou de plusieurs agents de démoulage ou adjuvants d'usinage, par rapport à 100 parties en poids des caoutchoucs (a).

9. Utilisation d'une composition vulcanisable pour la fabrication d'un vulcanisat qui est en contact avec des agents réfrigérants selon l'une quelconque des revendications 1 à 8, **caractérisée en ce que** la composition vulcanisable contient :
(a) 100 parties en poids d'au moins un caoutchouc, de préférence d'un caoutchouc de nitrile hydrogéné,
(b) 35 à 150 parties en poids, de préférence 50 à 100 parties en poids, d'au moins une wollastonite revêtue de silane, de préférence une wollastonite revêtue d'époxysilane, de méthacrylsilane ou de vinylsilane, ou leurs mélanges,
(c) 1 à 20 parties en poids, de préférence 2 à 10 parties en poids, d'au moins un composé de peroxyde,
(d) 0 à 100 parties en poids, de préférence 1 à 80 parties en poids, d'un ou de plusieurs additifs usuels pour le caoutchouc, de préférence d'une ou plusieurs charges, notamment le noir de carbone, la silice, l'oxyde de magnésium ou l'oxyde d'aluminium, d'un ou de plusieurs activateurs de charge, notamment à base d'un silane organique, d'un ou de plusieurs agents antivieillissement, notamment la 2,2,4-triméthyl-1,2-dihydro-quinoline oligomérisée (TMQ), la diphénylamine styrénisée (DDA), la diphénylamine octylée (OCD), la diphénylamine cumylée (CDPA) ou un sel de zinc de 4- et 5-méthylmercaptobenzimidazole (Vulkanox ZMB2) ou de 4- et 5-méthylmercaptobenzimidazole et/ou d'un ou de plusieurs agents de démoulage ou adjuvants d'usinage, par rapport à 100 parties en poids des caoutchoucs (a),
la teneur en ions zinc étant inférieure à 1,5 partie en poids, par rapport à 100 parties en poids des caoutchoucs (a), et la composition vulcanisable étant de préférence exempte d'ions zinc.

10. Utilisation d'un vulcanisat, fabriqué à partir d'une composition vulcanisable telle que définie dans les revendications 1 à 9, pour la fabrication d'un composant, dans lequel au moins le vulcanisat est en contact avec des agents réfrigérants.

11. Utilisation selon la revendication 10, **caractérisée en ce que** le composant est un tuyau, un tuyau de chauffage, un tuyau de réfrigération, un joint d'étanchéité ou un joint de réfrigération.

12. Utilisation selon l'une quelconque des revendications 1 à 11, dans laquelle l'agent réfrigérant contient de l'eau, un agent d'abaissement du point de congélation, de préférence un alkylglycol ou des sels, de manière particulièrement préférée l'éthylène glycol ou le propylène glycol, et un inhibiteur de corrosion, de préférence des acides organiques neutralisés, de manière particulièrement préférée l'hexanoate d'éthyle sodique.

13. Composition vulcanisable, contenant :
(a) 100 parties en poids de caoutchouc de nitrile hydrogéné,
(b) 50 à 85 parties en poids d'une wollastonite revêtue d'époxysilane, de méthacrylsilane ou de vinylsilane, ou leurs mélanges,
(c) 2 à 10 parties en poids d'au moins un composé de peroxyde,
la teneur en ions zinc étant inférieure à 1,5 partie en poids, par rapport à 100 parties en poids des caoutchoucs (a).

14. Composant comprenant un vulcanisat qui est en contact avec un agent réfrigérant, fabriqué à partir d'une composition vulcanisable, **caractérisé en ce que** la composition vulcanisable contient :
(a) au moins un caoutchouc de nitrile hydrogéné ou l'EPDM,
(b) au moins une wollastonite revêtue de silane, de préférence au moins une wollastonite revêtue de vinylsilane, et
(c) au moins un composé de peroxyde.

15. Appareil réfrigérant, comprenant :
(i) au moins un composant selon la revendication 14, et
(ii) des agents réfrigérants,
ledit au moins un vulcanisat étant en contact avec l'agent réfrigérant ii).

16. Utilisation de 35 à 150 parties en poids de wollastonite revêtue de silane, de préférence de wollastonite revêtue de vinylsilane, par rapport à 100 parties en poids dudit au moins un caoutchouc (a), dans une composition vulcanisable contenant au moins un caoutchouc (a) et au moins un composé de peroxyde (c) pour améliorer la résistance au vieillissement dans de l'air chaud après 21 jours à 150 °C et dans des agents réfrigérants après 21 jours à 150 °C de vulcanisats en contact avec des agents réfrigérants, fabriqués par vulcanisation de la composition vulcanisable.
